# EUROPÄISCHE PATENTANMELDUNG

(11) **EP 4 219 205 A1**
(43) Veröffentlichungstag der Anmeldung: **02.08.2023**
(21) Anmeldenummer: 22154274.9
(22) Anmeldetag: 31.01.2022
(51) Int. Cl.: B60K 1/04

(54) **PROFILSYSTEM, INSBESONDERE FÜR BATTERIEKÄSTEN VON ELEKTROFAHRZEUGEN**

(71) Anmelder: Speira GmbH, 41515 Grevenbroich (DE)
(72) Erfinder: DENKMANN, Volker, 47906 Kempen (DE); ARETZ, Holger, 53508 Mayschoss (DE); KRAMER, Philipp, 53332 Bornheim (DE); KRIEGER, Waldemar, 40211 Düsseldorf (DE)
(74) Vertreter: Walther Bayer Faber Patentanwälte PartGmbB

(57) **Zusammenfassung**

Gegenstand der Erfindung ist ein Profilsystem (1) eines Strukturbauteils eines Fahrzeugrahmens und/oder eines Batteriegehäuses (10) oder Batterierahmens (11) für die Aufnahme einer Batterie (12) eines elektrisch angetriebenen Fahrzeugs. Erfindungsgemäß weist das Profilsystem (1) ein äußeres Profilteil (13) auf, das korrosionsbeständig, entlang seiner Längserstreckung (L) gesehen geschlossen ausgeführt und im Rollformverfahren hergestellt ist, und das Profilsystem (1) weist wenigstens ein in das äußere Profilteil (13) eingesetztes inneres Profilteil (14) auf, sodass das innere Profilteil (14) vom äußeren Profilteil (13) im Wesentlichen vollständig umschlossen ist.

## Beschreibung

Die Erfindung betrifft ein Profilsystem eines Strukturbauteils eines Fahrzeugrahmens und/oder eines Batteriegehäuses oder Batterierahmens für die Aufnahme einer Batterie eines elektrisch angetriebenen Fahrzeugs.

### STAND DER TECHNIK

Zum Schutz vor einem Seitenaufprall werden in Fahrzeugen wie Autos und speziell für Batteriekästen moderner elektrisch fahrender Autos seitlich angeordnete Crashprofile verwendet. Gerade bei batterieelektrischen Fahrzeugen (BEV) sind die Sicherheitsanforderungen bei einem Seitenaufprall gestiegen. Da jede Lösung fahrzeugspezifisch ist und im Fall von Autos nicht selten deren Seitenschweller und die Batteriehalterung erst gemeinsam ein funktionierendes Crashsystem ergeben, gibt es eine enorme Nachfrage nach möglichst flexiblen Lösungen.

Zurzeit werden entweder rollgeformte Stahlprofile oder stranggepresste Mehrkammerprofile aus Aluminium eingesetzt. Nachteil der Stahllösung ist, dass die Rollformprofile zusätzlich gegen Korrosion geschützt werden müssen, wohingegen Crashprofile aus Aluminium keinen weiteren Oberflächenbehandlungsbedarf haben. Nachteilig bei den Strangpressprofilen aus Aluminium ist, dass bei Wanddickenänderungen oder geometrischen Formänderungen jeweils neue Werkzeuge beschafft werden müssen. Solche Änderungen sind in einer Rollformanlage leichter darzustellen, was die Flexibilität erhöht. Abgesehen davon sind Strangpressprofile pro Zeiteinheit nur in relativ geringen Stückzahlen herstellbar. Eine einfache Nachstellung der Aluminium-Mehrkammerstrangpressprofile durch Rollformen von Aluminium, um die Vorteile der beiden derzeit genutzten Systeme zu vereinen, ist, wenn überhaupt, nur mit großem Aufwand möglich, weshalb eine solche Lösung unwirtschaftlich ist. Vor allem komplexere im Rollformverfahren hergestellte Profile sind bezüglich ihrer geometrischen Formfreiheit begrenzt oder werden in der Herstellung sehr aufwändig.

Aus der DE 10 2019 123 906 A1 ist ein Batteriekasten zur Aufnahme wenigstens einer Batterie für ein Elektrofahrzeug mit einem außen umlaufenden Rahmen und mit einem Boden bekannt. Unterhalb des Rahmens ist ein umlaufendes Rahmenverstärkungselement zur Verstärkung des Rahmens angeordnet, wobei die Materialstärke des Rahmenverstärkungselements seiner Querschnittshöhe entspricht und damit erhöhte Herstellungskosten und ein erhöhtes Gewicht verursacht. Vordergründiges Ziel ist es dabei, einen Batteriekasten für ein Elektrofahrzeug zu schaffen, der einen einfachen konstruktiven Aufbau und zugleich eine verbesserte Energieabsorptionsfähigkeit im Falle einer Kollision mit einem Gegenstand oder mit einem anderen Fahrzeug aufweist.

Allerdings sollten die Herstellungskosten und das steifigkeitsspezifische Gewicht möglichst gering ausfallen.

### OFFENBARUNG DER ERFINDUNG

Die der Erfindung zugrunde liegende Aufgabe ist die Bereitstellung eines flexibel anpassbaren, variablen Profilsystems eines Strukturbauteils eines Fahrzeugrahmens und/oder eines Batteriegehäuses oder Batterierahmens, welches hohen Crashanforderungen genügt, korrosionsbeständig und wirtschaftlich herzustellen ist.

Diese Aufgabe wird durch den Gegenstand des unabhängigen Anspruches 1 gelöst. Vorteilhafte Weiterbildungen sind in den Unteransprüchen angegeben.

Die Erfindung schließt die technische Lehre ein, dass das Profilsystem ein äußeres Profilteil aufweist, das korrosionsbeständig, entlang seiner Längserstreckung gesehen geschlossen ausgeführt und im Rollformverfahren hergestellt ist, und ein in das äußere Profilteil eingesetztes inneres Profilteil aufweist, sodass das innere Profilteil vom äußeren Profilteil im Wesentlichen vollständig umschlossen ist.

Als Kern der Erfindung ist ein Crash- und/oder Steifigkeitsprofil zur Bildung des Strukturbauteils vorgesehen, das aus zwei zumindest zum Teil rollgeformten einzelnen Profilteilen zusammengesetzt ist und erfindungsgemäß ein erstes korrosionsbeständiges, geschlossenes, rollgeformtes Profilteil aufweist, das ein Außenprofil bildet, und ein zweites, vorzugsweise ebenfalls geschlossenes Profilteil aufweist und das ein Innenprofil bildet. Das so gebildete Profilsystem ist insbesondere gestaltet, in seiner Gesamtheit als Crashprofil für Fahrzeuge Einsatz zu finden, insbesondere um als Fahrzeugrahmen und/oder als Batteriegehäuse oder/oder als Batterierahmen zu dienen, um darin eine Batterie einzusetzen und/oder in diesem aufzunehmen. Beide Profilteile sollen dabei ineinander gefügt sein. Die Rollformung führt dazu, dass beide oder die mehreren Profilteile in kurzer Zeit in hohen Stückzahlen und damit sehr preisgünstig hergestellt werden können, da zwei Profilteile mit geringer Komplexität zu einem Gesamtprofil und damit zu einem Profilsystem mit höherer Komplexität zusammengesetzt werden können, während das Zusammensetzen der beiden Profilteile einfach und kostensparend ausgeführt werden kann und zugleich die Herstellung der einzelnen Profilteile ebenfalls kostenminimal erfolgt, da auf anspruchsvolle Querschnittsgeometrien verzichtet werden kann.

Falls mehr als zwei oder drei einzelne Profilteile verwendet werden, würde zwar die Flexibilität der Einzelprofile abnehmen, allerdings müssten eine Vielzahl von Fügeoperationen durchgeführt werden, wodurch die Fertigung des Gesamtprofils komplexer und auch unwirtschaftlich wird. Bei der Verwendung von nur einem Profilteil wäre die Komplexität eines den Crashanforderungen genügenden Einzelprofils zu hoch und dadurch gleichermaßen unwirtschaftlich oder technisch überhaupt nicht darstellbar. Die ideale Lösung besteht deshalb aus zwei oder maximal drei einfach aufgebauten Einzelprofilen, die gemeinsam ein komplexes Profil ergeben, wobei im Sinne der Erfindung an der Bildung des Profilsystems auch mehrere Profilteile vorgesehen sein können, die ineinander liegend gefügt werden. So ist es auch vorteilhaft umsetzbar, wenn zwei innere Profilteile nebeneinander in das äußere Profilteil eingesetzt werden, die jeweils eine sehr einfache Querschnittsform aufweisen, beispielweise einen kreisrunden oder vorzugsweise elliptischen Querschnitt.

Vorzugsweise ist das äußere Profilteil aus einem korrosionsbeständigen Material gebildet. Dieses Material besteht im Wesentlichen aus einem Metall, einem Metallverbund oder einer Metalllegierung. "Im Wesentlichen" bedeutet im Rahmen der Erfindung, dass das Metall, der Metallverbund bzw. die Metalllegierung zum Crash- und/oder Steifigkeitseffekt des Profilsystems maßgeblich beitragen. Andere Materialien wie eine Beschichtung in Form beispielsweise einer Lackierung sorgen zwar für einen optischen Effekt und/oder einen Schutz vor nichtmechanischen Einflüssen, haben aber grundsätzlich nicht die Aufgabe, dafür zu sorgen, dass der Crash- bzw. Steifigkeitseffekt des erfindungsgemäßen Profilsystems entsteht; diese anderen Materialien können diesen Effekt möglicherweise in einem zumindest geringen Maße allenfalls unterstützen. Zudem ist vorteilhafterweise vorgesehen, dass auch das innere Profilteil im Rollformverfahren hergestellt ist und/oder wie auch das äußere Profilteil entlang seiner Längserstreckung im Querschnitt gesehen geschlossen ausgeführt ist.

Ist mindestens eines der Profilteile, vorzugsweise also beide Profilteile, mittels eines Rollformverfahrens hergestellt, können Änderungen am Profil selbst, wie beispielsweise Wandstärken oder andere Dimensionen, ohne die Herstellung neuer Werkzeuge weiterhin mit einem Rollformverfahren realisiert werden. Durch eine geeignete Wahl der Wanddicken und Geometrie der Außen- und Innenprofile können das Gewicht, die Steifigkeit sowie die Crasheigenschaften optimiert werden. Die Kombination der Profile erlaubt es, unterschiedliche Aluminiumlegierungen in den Einzelprofilen zu verwenden. Es besteht auch die Möglichkeit, andere Werkstoffe, z. B. Stahl, mit Profilteilen auf Aluminiumbasis zu kombinieren, ohne auf die Eigenschaften der Korrosionsbeständigkeit des äußeren Profils verzichten zu müssen.

Für die Herstellung des äußeren Profilteils wird ein korrosionsbeständiges Metall, insbesondere eine korrosionsbeständige Legierung, genutzt, wodurch auf Korrosionsschutzbehandlungen verzichtet werden kann. Dabei kann das äußere Profilteil vorzugsweise aus Aluminium hergestellt werden, wobei aufgrund ihrer hohen Festigkeiten die Legierungsklassen 5xxx, 6xxx und 7xxx vorteilhaft verwendet werden können.

Das innere Profilteil und/oder das äußere Profilteil können mit weiterem Vorteil auf kostengünstige Weise längsnahtgeschweißt ausgebildet sein. Längsnahtgeschweißte Profilteile können aus einem Blechelement mittels des Rollformverfahrens hergestellt werden, sodass damit eine große Variantenvielfalt an metallischen Werkstoffen und geometrischen Formen möglich ist und/oder wobei beide Profilteile an mindestens einer Stelle miteinander verbunden sind. Wenigstens eines der Profilteile oder die mehreren Profilteile weisen insofern Längsschweißnähte auf, die sich vorzugsweise in Längserstreckung über der vorzugsweise gesamten Länge Profilteile erstrecken. Die Schweißpunkte, mit denen die Profilteile miteinander verschweißt sind, können mit den Längsschweißnähten zusammenfallen oder vorzugsweise ortsunterschiedlich zu diesen angeordnet sein, wobei die Schweißpunkte ebenfalls als Schweißnaht ausgebildet sein können und damit eine vorzugsweise längliche Erstreckung aufweisen.

Das innere Profilteil kann aus einem Metall, einem Metallverbund und/oder einer Metalllegierung gebildet sein, wobei es auch vorteilhaft möglich ist, dass die Metalllegierung oder der Metallverbund des inneren Profilteils mittels mindestens einer hochfesten Aluminiumlegierung der Legierungsklasse 5xxx und/oder 6xxx und/oder 7xxx und/oder einer Eisenbasislegierung gebildet ist. Auch ist es denkbar, dass das innere Profilteil nicht aus einem metallischen Werkstoff ausgebildet ist, beispielsweise aus einem Faserverbundwerkstoff. Wiederum vorteilhaft ist es denkbar, dass das innere Profilteil einen Metallschaum aufweist, beispielsweise einen Aluminiumschaum, mit dem wenigstens ein Abschnitt des inneren Profilteils gebildet ist oder mit dem wenigstens ein Hohlraum gefüllt ist.

Eine minimale Anzahl an Fügeoperationen kann durch die geschickte Auslegung und Verwendung des inneren und äußeren Profilteils und damit des Gesamtprofilsystems erreicht werden. Idealerweise können bei der Fertigung der Einzelprofile alle Fügeoperationen inline dargestellt werden. Die einzelnen Profilteile können dann beispielsweise entlang der Längserstreckung spielbehaftet ineinander geschoben oder spielfrei ineinander gepresst werden, bevor diese wiederum stoffschlüssig, formschlüssig oder reibschlüssig bzw. kraftschlüssig miteinander verbunden werden.

Mindestens eines der beiden Profilteile weist eine sich selbst versteifende Struktur auf, welche in Kombination mit dem anderen Profilteil dazu beiträgt, die für die Crashtauglichkeit nötige Energie zu absorbieren. Weiterhin sorgt es dafür, dass im Falle eines Unfalls sowohl die Passagiere als auch die Batterie unversehrt bleiben, abhängig davon, wie das Profilsystem im Fahrzeug als Strukturbauteil eingesetzt wird. Die selbst versteifende Struktur kann so ausgebildet sein, dass bei einer fortschreitenden plastischen Verformung des wenigstens einen Profilteils die Verformungskräfte bezogen auf den fortschreitenden Umformgrad überproportional ansteigen.

Die sich selbst versteifende Struktur wird beispielsweise dadurch gebildet, das äußere und/oder das innere Profilteil mit einer sich selbst versteifenden Teilstruktur auszubilden. Eine solche Teilstruktur kann beispielsweise eine Versickung betreffen, mit der eine definierte Faltenbildung bei einer plastischen Verformung der Profilteile erreicht wird, die mit fortschreitendem Umformgrad entsprechend zunimmt.

Schließlich ist vorgesehen, dass am inneren Profilteil und/oder am äußeren Profilteil wenigstens ein Befestigungspunkt angeordnet ist, insbesondere zum Halten eines zugehörigen Anbauteils des Fahrzeugs bzw. der Batterie oder zur Befestigung des Profilsystems selbst in der Einbauumgebung im Fahrzeug. Der Befestigungspunkt bildet beispielsweise eine angefügte oder angeformte Lasche, eine Öse und/oder eine Ausklinkung. Der Befestigungspunkt kann aber auch durch eine gezielte Aussparung im Profil realisiert werden, die beispielsweise zur Anbringung einer Schraubverbindung genutzt werden kann.

Die Erfindung betrifft weiterhin ein Strukturbauteil eines Fahrzeugrahmens und/oder eines Batteriegehäuses oder Batterierahmens für die Aufnahme einer Batterie eines elektrisch angetriebenen Fahrzeugs, mit einem Profilsystem gemäß obenstehender Beschreibung.

Weiterhin betrifft die Erfindung ein Fahrzeug, aufweisend das obenstehend beschriebene Strukturbauteil, wobei das Strukturbauteil einen Teil eines Gehäuses oder ein gesamtes Gehäuse für ein zu schützendes Element des Fahrzeugs bildet und/oder wobei mindestens eine Teilfläche des äußeren Profilteils eine Außenfläche des Fahrzeugs bildet.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine perspektivische Ansicht eines Batteriegehäuses mit einem erfindungsgemäßen Profilsystem,
- Figur 2: eine Detailansicht des Profilsystems in Anordnung an oder als Bestandteil des Batteriegehäuses,
- Figur 3a: eine abgewandelte Ausführungsform des Profilsystems mit einer ersten Teilstruktur des inneren Profilteils,
- Figur 3b: eine Gesamtansicht des Profilsystems mit der Teilstruktur des inneren Profilteils gemäß Figur 3a,
- Figur 4a: eine weitere abgewandelte Ausführungsform des Profilsystems mit zwei inneren Profilteilen,
- Figur 4b: eine Gesamtansicht des Profilsystems gemäß Figur 4a,
- Figur 5: eine weitere perspektivische Ansicht des Batteriegehäuses mit am Profilsystem angebrachten Befestigungspunkten.

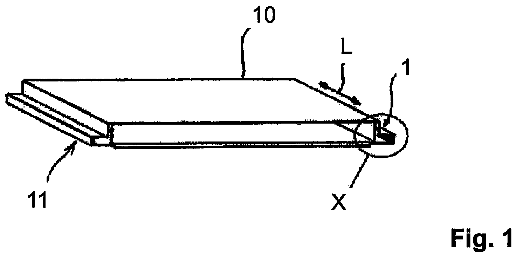

In Figur 1 ist ein Profilsystem 1 eines Strukturbauteils am Beispiel eines Batteriegehäuses 10 gezeigt, wobei das Profilsystem 1 den Batterierahmen 11 zur Aufnahme einer innenliegenden, hier nicht sichtbaren elektrischen Batterie dient, insbesondere für elektrisch angetriebene Fahrzeuge. Das Profilsystem 1 kann beispielsweise einen rechteckigen, die Batterie damit vollständig umschließenden Batterierahmen 11 mit vier Abschnitten des Profilsystems 1 bilden. Die Abbildung zeigt dabei das Batteriegehäuse 10 und damit den Batterierahmen 11 in vorderseitig geschnittener Weise, sodass das Profilsystem 1 gemäß dem Detail X sichtbar wird.

Das Profilsystem 1 gemäß dem gezeigten Detail X ist in den folgenden Abbildungen näher dargestellt.

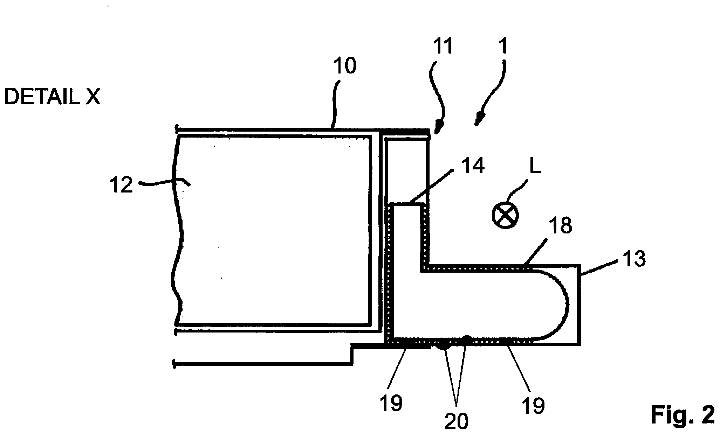

Figur 2 zeigt das Detail X gemäß Figur 1 in einer vergrößerten Ansicht, sodass das Profilsystem 1 zur Bildung eines Batterierahmens 11 eines Batteriegehäuses 10 zur Aufnahme einer Batterie 12 detailliert dargestellt ist. Die Batterie kann insbesondere wiederaufladbar sein, sodass unter dem Begriff der Batterie vorliegend auch ein Akkumulator als mit umfasst verstanden werden soll. Die Batterie 12 ist gemäß dem gezeigten Ausführungsbeispiel als Traktionsbatterie zum elektrischen Antrieb eines Fahrzeugs, damit also eines Elektrofahrzeugs, ausgebildet und wird im Rahmen und insbesondere im Chassis eines Fahrzeugs aufgenommen, an diesem angeordnet oder bildet einen Teil desselben.

Das Profilsystem 1 weist erfindungsgemäß ein äußeres Profilteil 13 auf, das in seiner Längserstreckung L, die in der Abbildung auf der Bildebene senkrecht steht, gesehen geschlossen ausgeführt ist, und wobei das äußere Profilteil 13 im Rollformverfahren hergestellt ist. Weiterhin weist das Profilsystem 1 ein inneres Profilteil 14 auf, das in das äußere Profilteil 13 eingesetzt ist. Das Ausführungsbeispiel stellt beispielhaft das innere Profilteil 14 ebenfalls mit einem vollständig geschlossenen Querschnitt dar, und auch das innere Profilteil 14 kann im Rollformverfahren hergestellt sein. Somit sind gemäß dem Ausführungsbeispiel das äußere Profilteil 13 und das innere Profilteil 14 jeweils mit einer geschlossenen Gesamtkontur ausgebildet und jeweils im Rollformverfahren hergestellt, wobei beide Profilteile 13, 14 einen Aluminiumwerkstoff, insbesondere eine Aluminiumlegierung aufweisen können. Beide Profilteile 13 und 14 weisen im Querschnittsprofil eine L- Form auf und sind ineinander liegend angeordnet, indem das innere Profilteil 14 in das äußere Profilteil 13 eingeschoben wurde. Die langen Schenkel und die kurzen Schenkel der L- Form beider Profilteile 13, 14 liegen dabei einander zugeordnet ineinander.

Im Bereich zwischen der Innenseite des äußeren Profilteils 13 und der Außenseite des inneren Profilteils 14 ist schematisch eine Stoffschlussverbindung 18 dargestellt, die insbesondere eine Verlötung und/oder Verklebung umfassen kann. Zusätzlich oder alternativ sind Schweißpunkte 19 dargestellt, um das innere Profilteil 14 innerhalb des äußeren Profilteils 13 ortsfest anzuordnen und mittels einer punktuellen oder linienartigen Verschweißung zu verbinden, wobei letztere beispielweise in Längserstreckung L verläuft und damit auch eine Schweißnaht bilden kann.

Weiterhin sind Längsschweißnähte 20 gezeigt, mit denen die Längskanten der Profilteile 13, 14 vorzugsweise über ihrer gesamten Länge miteinander verschweißt sind und in der Ansicht im Nahtquerschnitt zu sehen sind. Die Längsschweißnähte 20 fallen dabei gemäß einer ersten Variante mit den Schweißpunkten 19 möglichst nicht zusammen oder die Schweißpunkte 19 und die Längsschweißnähte 20 sind nach einer alternativen, zweiten für jedes Profilteil 13, 14 gemeinsam und einheitlich ausgeführt, insbesondere wenn die Schweißpunkte 19 selber auch eine Schweißnaht mit einer Längserstreckung bilden, sodass die Schließung der Profilquerschnitte nach dem Rollumformen und die Verschweißung beider Profilteile 13, 14 miteinander schweißeinheitlich ausgeführt wird und damit die Schweißpunkte 19 und die Längsschweißnähte 20 zusammenfallen.

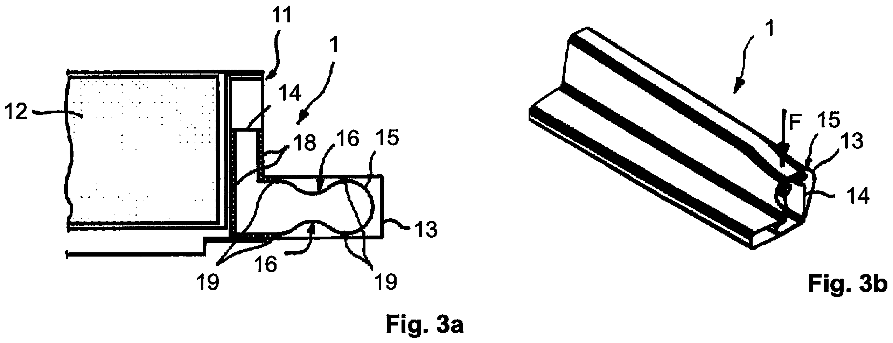

Die Figuren 3a und 3b zeigen ein weiteres Ausführungsbeispiel eines Profilsystem 1 als Strukturbauteil des Batterierahmens 11 einer Batterie 12 für ein elektrisch angetriebenes Fahrzeug. Das äußere Profilteil 13 nimmt das innere Profilteil 14 auf, wobei beide Profilteile 13, 14 auch gemäß diesem Ausführungsbeispiel vollumfänglich geschlossen ausgeführt sind. Das innere Profilteil 14 ist mit einer Struktur 15 ausgebildet, wobei die Struktur 15 selbstversteifende Eigenschaften aufweist, indem die Struktur 15 insbesondere mit der gezeigten Teilstruktur 16 so ausgebildet ist, dass bei einer fortschreitenden plastischen Verformung, dargestellt durch eine Krafteinwirkung mit der Kraft F in Figur 3b, die Verformungskräfte bezogen auf den fortschreitenden Umformgrad überproportional ansteigen. Die gezeigte Versickung bildet dabei die Teilstruktur 16, sodass eine Faltenbildung bei der plastischen Verformung entsprechend determiniert werden kann. Die gezeigte Versickung zur Bildung der Teilstruktur 16 ist lediglich beispielhaft zu verstehen, und es können auch in der flächigen Erstreckung in der Wandung des inneren Profilteils 14 Strukturen vorgesehen sein, die ein bestimmtes Verformungsverhalten erzeugen. Selbstverständlich können diese Strukturen auch im äußeren Profilteil 13 vorgesehen werden.

Die Darstellung in Figur 3a zeigt weiterhin beispielhaft eine Stoffschlussverbindung 18 zwischen dem inneren Profilteil 14 und dem äußeren Profilteil 13, wobei weiterhin beispielhaft Schweißpunkte 19 gezeigt sind.

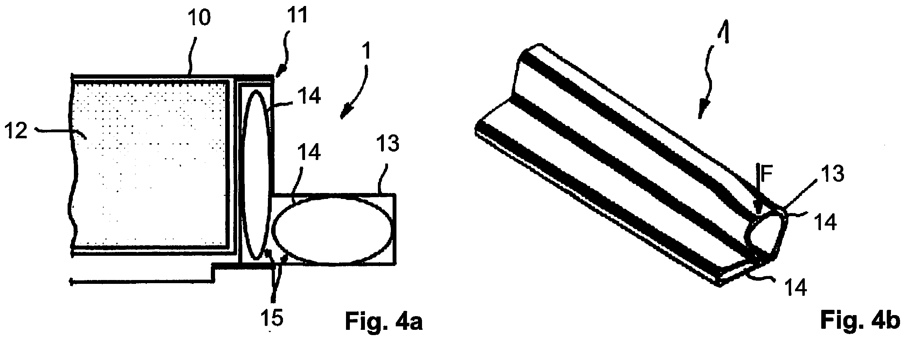

Die Figuren 4a und 4b zeigen in Abwandlung des Ausführungsbeispiels gemäß der Figuren 3a und 3b ein Profilsystem 1 eines Batterierahmens 11 als Teil eines Batteriegehäuses 10 für eine Batterie 12, wobei das Profilsystem 1 mit zwei inneren Profilteilen 14 ausgeführt ist, die in jeweiligen schenkelartigen Abschnitten des äußeren Profilteils 13 eingebracht sind. Die inneren Profilteile 14 weisen eine elliptische Querschnittskontur auf, sodass auch damit ein determiniertes Verformungsverhalten erzielt werden kann, sodass in dem elliptischen Querschnitt auch die Struktur 15 zur selberversteifenden Struktur werden kann.

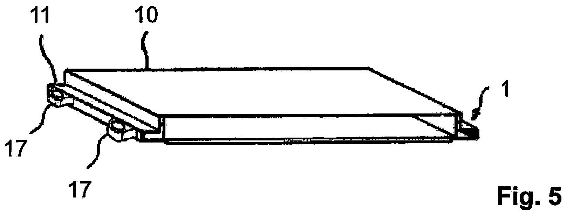

Figur 5 zeigt schließlich ein Ausführungsbeispiel eines Profilsystems 1 für ein Batteriegehäuse 10 umfassend einen Batterierahmen 11, wobei das Profilsystem 1 beispielhaft zwei Befestigungspunkte 17 aufweist. Die Befestigungspunkte 17 können beispielhaft dazu dienen, Umbauteile an das Batteriegehäuse 10 anzubringen oder es ist vorgesehen, das Batteriegehäuse 10 selbst über die Befestigungspunkte 17 in seiner Einbauumgebung zu befestigen. Die Befestigungspunkte 17 können beispielsweise stoffschlüssig mit der Außenseite des äußeren Profilteils 13 des Profilsystems 1 verbunden sein, beispielsweise indem die Befestigungspunkte 17 an das äußere Profilteil 13 angeschweißt werden. Alternativ können die Befestigungspunkte 17 auch durch lokale Ausklinkungen aus dem äußeren Profilteil 13 gebildet sein, sofern eine damit entstehende Öffnung im äußeren Profilteil 13 mit Bezug auf die Einbausituation des Batteriegehäuses 10 annehmbar ist.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 1: Profilsystem

- 10: Batteriegehäuse
- 11: Batterierahmen
- 12: Batterie
- 13: äußeres Profilteil
- 14: inneres Profilteil
- 15: Struktur
- 16: Teilstruktur
- 17: Befestigungspunkt
- 18: Stoffschlussverbindung
- 19: Schweißpunkt
- 20: Längsschweißnaht

- L: Längserstreckung
- X: Detail
- F: Kraft

## Patentansprüche

1. Profilsystem (1) eines Strukturbauteils eines Fahrzeugrahmens und/oder eines Batteriegehäuses (10) oder Batterierahmens (11) für die Aufnahme einer Batterie (12) eines elektrisch angetriebenen Fahrzeugs,
**dadurch gekennzeichnet,**
**dass** das Profilsystem (1) aufweist:
- ein äußeres Profilteil (13), das korrosionsbeständig, entlang seiner Längserstreckung (L) gesehen geschlossen ausgeführt und im Rollformverfahren hergestellt ist, und
- wenigstens ein in das äußere Profilteil (13) eingesetztes inneres Profilteil (14), sodass das innere Profilteil (14) vom äußeren Profilteil (13) im Wesentlichen vollständig umschlossen ist.

2. Profilsystem (1) nach Anspruch 1,
**dadurch gekennzeichnet,**
**dass**
- das äußere Profilteil (13) ein korrosionsbeständiges Metall aufweist, insbesondere einen Metallverbund oder eine Metalllegierung und/oder dass
- das innere Profilteil (14) im Rollformverfahren hergestellt und/oder entlang seiner Längserstreckung (L) gesehen geschlossen ausgeführt ist.

3. Profilsystem (1) nach Anspruch 2,
**dadurch gekennzeichnet,**
**dass** das korrosionsbeständige Metall des äußeren Profilteils (13) aus Aluminium und/oder aus mindestens einer vorzugsweise hochfesten Aluminiumlegierung der Legierungsklasse 5xxx, 6xxx oder 7xxx gebildet ist.

4. Profilsystem (1) nach einem der Ansprüche 1 bis 3,
**dadurch gekennzeichnet,**
**dass** das innere Profilteil (14) und/oder das äußere Profilteil (13) längsnahtgeschweißt ausgebildet ist und/oder dass beide Profilteile (13, 14) an mindestens einer Stelle miteinander verbunden sind.

5. Profilsystem (1) nach einem der vorgenannten Ansprüche,
**dadurch gekennzeichnet,**
**dass** die Verbindung zwischen den Profilteilen (13, 14) stoffschlüssig, formschlüssig und/oder reibschlüssig bzw. kraftschlüssig erfolgt.

6. Profilsystem (1) nach einem der vorgenannten Ansprüche,
**dadurch gekennzeichnet,**
**dass** das innere Profilteil (14) aus einem Metall, einem Metallverbund und/oder einer Metalllegierung gebildet ist.

7. Profilsystem (1) nach Anspruch 6,
**dadurch gekennzeichnet,**
**dass** die Metalllegierung oder der Metallverbund des inneren Profilteils (14) gebildet ist mittels
- mindestens einer hochfesten Aluminiumlegierung der Legierungsklasse 5xxx und/oder 6xxx und/oder 7xxx und/oder
- einer Eisenbasislegierung und/oder
- eines Faserverbundwerkstoffes.

8. Profilsystem (1) nach einem der vorgenannten Ansprüche,
**dadurch gekennzeichnet,**
**dass** das innere Profilteil (14) in das äußere Profilteil (13) eingelegt, entlang der Längserstreckung (L) spielbehaftet eingeschoben oder spielfrei eingepresst ist.

9. Profilsystem (1) nach einem der vorgenannten Ansprüche,
**dadurch gekennzeichnet,**
**dass** das innere Profilteil (14) und/oder das äußere Profilteil (13) eine sich selbst versteifende Struktur (15) aufweist, die so ausgebildet ist, dass bei einer fortschreitenden plastischen Verformung des wenigstens einen Profilteils (13, 14) die Verformungskräfte bezogen auf den fortschreitenden Umformgrad überproportional ansteigen.

10. Profilsystem (1) nach Anspruch 9,
**dadurch gekennzeichnet,**
**dass** die sich selbst versteifende Struktur (15) gebildet ist, indem das äußere und/oder das innere Profilteil (13, 14) eine sich selbst versteifende Teilstruktur (16) aufweist bzw. aufweisen.

11. Profilsystem (1) nach einem der vorgenannten Ansprüche,
**dadurch gekennzeichnet,**
**dass** am inneren Profilteil (14) und/oder am äußeren Profilteil (13) wenigstens ein Befestigungspunkt (17) angeordnet ist, insbesondere zum Halten eines zugehörigen Anbauteils des Fahrzeugs bzw. der Batterie (12) oder zur Befestigung des Profilsystems (1) selbst.

12. Strukturbauteil eines Fahrzeugrahmens und/oder eines Batteriegehäuses (10) oder Batterierahmens (11) für die Aufnahme einer Batterie (12) eines elektrisch angetriebenen Fahrzeugs, aufweisend ein Profilsystem (1) nach einem der vorgenannten Ansprüche.

13. Fahrzeug, aufweisend ein Strukturbauteil, wobei das Strukturbauteil
- einen Teil eines Gehäuses oder ein gesamtes Gehäuse für ein zu schützendes Element des Fahrzeugs bildet und/oder
- mindestens eine Teilfläche des äußeren Profilteils (13) eine Außenfläche des Fahrzeugs bildet.

## Geänderte Patentansprüche

### Geänderte Patentansprüche gemäss Regel 137(2) EPÜ.

1. Profilsystem (1) eines Strukturbauteils eines Fahrzeugrahmens und/oder eines Batteriegehäuses (10) oder Batterierahmens (11) für die Aufnahme einer Batterie (12) eines elektrisch angetriebenen Fahrzeugs, aufweisend ein äußeres Profilteil (13) und ein in das äußere Profilteil (13) eingesetztes inneres Profilteil (14), sodass das innere Profilteil (14) vom äußeren Profilteil (13) im Wesentlichen vollständig umschlossen ist,
**dadurch gekennzeichnet,**
**dass** das äußere Profilteil (13) aus Aluminium und/oder aus mindestens einer vorzugsweise hochfesten Aluminiumlegierung der Legierungsklasse 5xxx, 6xxx oder 7xxx gebildet ist und korrosionsbeständig, entlang seiner Längserstreckung (L) gesehen geschlossen ausgeführt und im Rollformverfahren hergestellt ist, und
- **dass** das innere Profilteil (14) aus einem Metall, einem Metallverbund und/oder einer Metalllegierung gebildet ist, wobei
- die Metalllegierung oder der Metallverbund des inneren Profilteils (14) gebildet ist mittels
- mindestens einer hochfesten Aluminiumlegierung der Legierungsklasse 5xxx und/oder 6xxx und/oder 7xxx und/oder
- einer Eisenbasislegierung und/oder
- eines Faserverbundwerkstoffes.

2. Profilsystem (1) nach Anspruch 1,
**dadurch gekennzeichnet,**
**dass** das innere Profilteil (14) im Rollformverfahren hergestellt und/oder entlang seiner Längserstreckung (L) gesehen geschlossen ausgeführt ist.

3. Profilsystem (1) nach Anspruch 1 oder 2,
**dadurch gekennzeichnet,**
**dass** das innere Profilteil (14) und/oder das äußere Profilteil (13) längsnahtgeschweißt ausgebildet ist und/oder dass beide Profilteile (13, 14) an mindestens einer Stelle miteinander verbunden sind.

4. Profilsystem (1) nach Anspruch 3,
**dadurch gekennzeichnet,**
**dass** die Verbindung zwischen den Profilteilen (13, 14) stoffschlüssig, formschlüssig und/oder reibschlüssig bzw. kraftschlüssig erfolgt.

5. Profilsystem (1) nach einem der vorgenannten Ansprüche,
**dadurch gekennzeichnet,**
**dass** das innere Profilteil (14) in das äußere Profilteil (13) eingelegt, entlang der Längserstreckung (L) spielbehaftet eingeschoben oder spielfrei eingepresst ist.

6. Profilsystem (1) nach einem der vorgenannten Ansprüche,
**dadurch gekennzeichnet,**
**dass** das innere Profilteil (14) und/oder das äußere Profilteil (13) eine Versickung aufweist bzw. aufweisen, womit sich eine sich selbst versteifende Struktur (15) ergibt, die so ausgebildet ist, dass bei einer fortschreitenden plastischen Verformung wenigstens eines Profilteils (13, 14) die Verformungskräfte bezogen auf den fortschreitenden Umformgrad überproportional ansteigen.

7. Profilsystem (1) nach Anspruch 6,
**dadurch gekennzeichnet,**
**dass** die sich selbst versteifende Struktur (15) gebildet ist, indem das äußere und/oder das innere Profilteil (13, 14) eine sich selbst versteifende Teilstruktur (16) mittels der Versickung aufweist bzw. aufweisen.

8. Profilsystem (1) nach einem der vorgenannten Ansprüche,
**dadurch gekennzeichnet,**
**dass** am inneren Profilteil (14) und/oder am äußeren Profilteil (13) wenigstens ein Befestigungspunkt (17) angeordnet ist, insbesondere zum Halten eines zugehörigen Anbauteils des Fahrzeugs bzw. der Batterie (12) oder zur Befestigung des Profilsystems (1) selbst.

9. Strukturbauteil eines Fahrzeugrahmens und/oder eines Batteriegehäuses (10) oder Batterierahmens (11) für die Aufnahme einer Batterie (12) eines elektrisch angetriebenen Fahrzeugs, aufweisend ein Profilsystem (1) nach einem der vorgenannten Ansprüche.

10. Fahrzeug, aufweisend ein Strukturbauteil nach Anspruch 9, wobei das Strukturbauteil
- einen Teil eines Gehäuses oder ein gesamtes Gehäuse für ein zu schützendes Element des Fahrzeugs bildet und/oder
- mindestens eine Teilfläche des äußeren Profilteils (13) eine Außenfläche des Fahrzeugs bildet.
